Europäisches Patentamt

European Patent Office

Office européen des brevets

(19)

(11) **EP 0 727 303 B1**

(12) **EUROPÄISCHE PATENTSCHRIFT**

(45) Veröffentlichungstag und Bekanntmachung des Hinweises auf die Patenterteilung:
**03.02.1999  Patentblatt 1999/05**

(51) Int. Cl.$^6$: **B29C 67/24**, C08G 63/78, C08G 63/90

(21) Anmeldenummer: 96102464.3

(22) Anmeldetag: 19.02.1996

(54) **Kondensations-Spritzgussverfahren zur Herstellung von Flaschenvorformlingen aus Polyethylenterephthalat und/oder seinen Copolyestern.**

Process for postcondensation and rejection moulding of polyethyleneterephthalate, homopolymer or copolymer for the manufacturing of bottle preforms.

Procédé pour la postcondensation et le moulage à injection de polyéthylènetéréphthalate homopolymère ou copolymère pour la fabrication de préformes de bouteilles.

(84) Benannte Vertragsstaaten:
**DE FR GB IT**

(30) Priorität: **20.02.1995 DE 19505680**

(43) Veröffentlichungstag der Anmeldung:
**21.08.1996  Patentblatt 1996/34**

(73) Patentinhaber: **EMS-INVENTA AG**
**8001 Zürich (CH)**

(72) Erfinder:
• **Stibal, Werner, Dipl.-Ing.**
**CH-7203 Trimmis (CH)**
• **Kägi, Werner, Dipl.-Chem. Ing. ETH**
**CH-7013 Domat/Ems (CH)**
• **Ensinger, Joachim, Dipl.-Ing. TH**
**CH-7430 Thusis (CH)**
• **Nothhelfer, Klaus, Dipl.-Phys.**
**CH-7430 Thusis (CH)**

(74) Vertreter: **Becker, Eberhard**
**Patentanwälte,**
**Kırschner & Kurig,**
**Sollner Strasse 38**
**81479 München (DE)**

(56) Entgegenhaltungen:
**EP-A- 0 233 661            FR-A- 2 426 059**
**US-A- 4 142 040**

• **DATABASE WPI Section Ch, Week 7831 Derwent Publications Ltd., London, GB; Class A23, AN 78-55648A XP002008458 & JP-A-53 071 162 (TEIJIN KK) , 24.Juni 1978**

**Beschreibung**

Die Erfindung betrifft den in den Patentansprüchen angegebenen Gegenstand.

Die Erfindung betrifft insbesondere ein Kondensations-Spritzgußverfahren, d.h. ein "in line"-Verfahren zur Herstellung von Flaschenvorformlingen aus der Schmelze von Polyethylenterephthalat (PET) und/oder seinen Copolyestern (CoPET) zur Herstellung von Flaschen, die im Nahrungsmittelbereich eingesetzt werden sollen. Insbesondere sollen diese Flaschen zur Getränkeabfüllung, bevorzugt kohlensäurehaltiger Süßgetränke, verwendet werden.

Die nach dem vorgenannten Verfahren hergestellten Vorformlinge weisen einen besonders niedrigen Gehalt an Acetaldehyd auf.

Bei Polyester-Getränkeflaschen ist der Acetaldehydgehalt von besonderer Bedeutung. Acetaldehyd entsteht bei der Polyesterherstellung in kleinen Mengen durch eine thermische Abbaureaktion. Bei der Verwendung von Polyester für die Lebensmittelverpackung, insbesondere die Getränkeabfüllung, stören schon Spuren von Acetaldehyd, weil Acetaldehyd als sehr geruchs- und geschmacksintensiver Stoff den Geschmack merklich verändert. Als oberer akzeptabler Grenzwert wurde von der Firma Coca Cola eine Acetaldehydkonzentration von 3 $\mu$g/$\ell$ festgelegt, gemessen im Gasinhalt einer frisch hergestellten verschlossenen Polyesterflasche nach 24 Stunden (Coca-Cola-Norm).

Um diese Anforderung erfüllen zu können, ist gemäß Stand der Technik der Weg über eine Festphasenbehandlung des zunächst in der Schmelzephase hergestellten Rohpolyesters notwendig.

Dieser Technologiestand ist beschrieben im Tagungsbuch "Entgasen beim Herstellen und Aufbereiten von Kunststoffen" im Beitrag von A. Fürst: "Entgasen bei der Polykondensation" (Seiten 187 und 192), VDI-Verlag GmbH, Düsseldorf 1992. Der konventionelle Weg über die Festphase beinhaltet die Schritte Granulierung einer mittelviskosen Schmelze, Kristallisation des amorphen Polyestergranulats und Festphasen-Polykondensation, um ein Granulat mit für die Flaschenherstellung geeigneter, höherer Viskosität und niedrigem Acetaldehydgehalt (im Bereich von etwa 1 ppm) zu erhalten.

Neben der Tatsache, daß man beim herkömmlichen Vorgehen gemäß dem Stand der Technik zweimal den Wärmeinhalt des Polyesters verliert, ist die Festphasenbehandlung wegen des Problems der Klebrigkeit anspruchsvoll und aufwendig. Besonders die Kristallisation von für die Flaschenherstellung bevorzugten Copolyestern, die beim Aufheizen noch stärker zum Verkleben neigen als normales (Homo-)PET, erfordert spezielle Verfahren und Vorrichtungen. Ein Beispiel dafür ist mit der EP-0 379 684 B1 gegeben, in welcher zwei Wirbelbettvorrichtungen verwendet werden. Aber auch im konventionellen Festphasenpolykondensationsreaktor, der bei noch höherer Temperatur als der Kristallisator betrieben wird, ist man vor Verklebungen des Granulats, die bis zum Stillstand der Anlage führen können, nicht gefeit. Vorschläge zur Überwindung dieses Problems werden z.B. in EP-0 269 583 B1 und in WO 94/17122 gemacht. In EP-0 541 674 B1 wird überdies vorgeschlagen, dem Granulat eine "Hundeknochen"-Querschnittsform zu geben, mit der Überlegung, daß sich dergestalt geformte Granulatkörner nur an wenigen Punkten berühren können und damit die Gefahr des Verklebens bei der Festphasenbehandlung reduziert wird.

Nach der vorgenannten Verfahrensweise kann somit Flaschengranulat (bottle grade chips) hergestellt werden. Dieses Granulat muß nun zum Vorformling- bzw. Flaschenhersteller transportiert werden.

Die Herstellung der Flasche aus dem Flaschengranulat geschieht in zwei Verfahrensschritten, wie sie z.B. beschrieben sind in M.S. Merlini: "Industrielle Verfahren zur Herstellung bi-orientierter Hohlkörper", Kunststoffe-Plastics 3/83, Seiten 17 bis 20. Im ersten Schritt wird das festphasennachkondensierte Polyestergranulat getrocknet, da es auf dem Anlieferungsweg wieder Feuchtigkeit aufgenommen hat, im Extruder einer Spritzgußmaschine aufgeschmolzen und in die Kavitäten des Spritzguß-Werkzeugs gedrückt, wodurch man Vorformlinge (preforms) der späteren Flasche erhält. Im zweiten Verfahrensschritt werden die Vorformlinge bei ca. 100 °C streckblasgeformt und beim Aufblasen biaxial (radial und axial) orientiert, wodurch die fertige Flasche die geforderten Gebrauchseigenschaften erhält. Diese zwei Verfahrensschritte können üblicherweise völlig getrennt durchgeführt werden, wobei die Vorformlinge völlig abkühlen.

Beim Aufschmelzen des Granulats im Spritzguß-Extruder nimmt der Acetaldehydgehalt im Polyester auf Grund von Scherung und hoher Temperatur wieder zu, da es zu einem gewissen thermischen Abbau und damit zu Acetaldehyd-Neubildung kommt. Das Ausmaß dieser Acetaldehyd-Neubildung liegt bei optimal eingestellten Extrudern und Spritzgußeinheiten bei etwa 5 ppm, was zusammen mit dem Anfangswert des Flaschengranulats (etwa 1 ppm) einen Acetaldehydgehalt im Vorformling von etwa 6 ppm ergibt. Zwischen dem Acetaldehydgehalt im Vorformling und der Acetaldehydkonzentration in der fertigen Flasche besteht ein ungefähr proportionaler Zusammenhang. Bei 1,5 Liter-Einwegflaschen (Gewicht etwa 48 g) gilt erfahrungsgemäß: Acetaldehydkonzentration in der fertigen Flasche (ausgedrückt in $\mu$g/$\ell$, bezogen auf das Gasvolumen bzw. den Inhalt der Flasche) = 0,3 x Acetaldehydgehalt im Vorformling (ausgedrückt in ppm, bezogen auf die Masse des Polyesters). Das heißt, daß man von einem Vorformling mit 6 ppm Acetaldehydgehalt einen entsprechenden Wert in der Flasche von etwa 1,8 $\mu$g/$\ell$ erwarten kann.

Umgekehrt betrachtet darf der Acetaldehydgehalt im Vorformling nicht höher als 10 ppm sein, um den Coca-Cola-Grenzwert von 3 $\mu$g/$\ell$ nicht zu überschreiten.

In bezug auf die Festphasen-Nachkondensation des Granulats gab es in letzter Zeit Bemühungen diese Prozeßstufe zu vereinfachen:

EP-0 422 282 A1 beschreibt ein Verfahren, bei welchem das Dianhydrid einer aromatischen Tetracarbonsäure, vorzugsweise Pyromellithsäuredianhydrid, in eine PET- oder CoPET-Schmelze dosiert und eingearbeitet wird. Das daraus hergestellte Granulat zeigt eine sehr schnelle Zunahme der Intrinsic-Viskosität (I.V.) bei einer Festphasenpolykondensation schon bei relativ niedrigen Temperaturen. Dadurch kann auf einen Festphasenreaktor im bisherigen Sinn verzichtet werden. Nach wie vor muß aber das Granulat kristallisiert und getrocknet werden, und das Dianhydrid hat überdies noch den Nebeneffekt, daß die nach der Additionsreaktion an die Anhydridgruppierungen freigewordenen zweiten Carboxylgruppen in einer Folgereaktion zumindest teilweise zu Verzweigungen führen können, was die Fließeigenschaften der Schmelze beim Spritzgießen verschlechtert.

DE 43 09 227 A1 beschreibt ein Verfahren, bei dem wie oben auf Grund von tieferen Temperaturen die ganze Festphasenbehandlung in Luft durchgeführt werden kann. In diesem Fall konnten die Behandlungstemperaturen dadurch auf 185 bis 190 °C gesenkt werden, weil feiner als üblich granuliert wird, und die kürzeren Diffusionswege bzw. die größere spezifische Oberfläche schon bei niedrigeren Temperaturen zu Viskositätsanstieg und zu weitgehender Entfernung des Acetaldehyds führen. Dieses Verfahren ist umständlich und von deutlich längerer Dauer als die übliche Festphasenbehandlung, und zudem wird das Granulat unter den angewandten Bedingungen von 14 Stunden in Luft bei Temperaturen bis 190 °C (bzw. 225 °C) bereits oxidativ angegriffen.

Es ist daher Aufgabe der Erfindung, ein neues Verfahren zur Herstellung von Flaschenvorformlingen aus der Schmelze von Polyethylenterephthalat und/oder seinen Copolyestern zur Verfügung zu stellen, so daß Vorformlinge hergestellt werden, die einen ausserordentlich niedrigen Acetaldehydgehalt aufweisen und langwierige Verfahrensstufen gemäß dem Stand der Technik vermieden werden können.

Diese Aufgabe wird durch das Kondensations-Spritzgußverfahren nach Anspruch 1 sowie durch die nach diesem Verfahren hergestellten Vorformlinge gelöst.

Die Erfindung betrifft daher ein Kondensations-Spritzgußverfahren zur Herstellung von Flaschenvorformlingen aus der Schmelze von Polyethylenterephthalat und/oder seinen Copolyestern, d.h. es wird erstmals ein sogenanntes "in line"-Verfahren zur Herstellung von Flaschenvorformlingen bereitgestellt. Bei dem erfindungsgemäßen Verfahren wird in den kontinuierlichen Strom oder Teilstrom der Polyester-Schmelze aus der Polykondensation, welche eine Intrinsic-Viskosität zwischen 0,5 und 0,75 dl/g aufweist, wahlweise ein Inertgas eingetragen, dann die Schmelze anschließend unter Vakuum im Temperaturbereich zwischen 285 bis 260°C in einem Schmelzenachkondensationsreaktor auf eine Intrinsic-Viskosität von 0,75 bis 0,95 dl/g während einer Verweilzeit von weniger als 60 Min. auf einen Acetaldehydgehalt von unter 10 ppm gefahren und unmittelbar darauf in ein Spritzgußwerkzeug geleitet und zu Vorformlingen verarbeitet. In einer bevorzugten Ausführungsform kann der Acetaldehydgehalt auf unter 5 ppm gefahren werden. In einer ebenfalls anderen Ausführungsform kann der Schmelzestrom mittels einer Fördereinrichtung in ein Spritzgußwerkzeug geleitet werden. Bei dieser Fördereinrichtung kann man vorzugsweise eine Vorrichtung mit Doppelkolbensystem verwenden. Bei dem Schmelzenachkondensationsreaktor handelt es sich vorzugsweise um einen Schnecken-Nachkondensationsreaktor mit mindestens zwei Schneckenwellen. Die Schneckendrehzahl ist den Prozeßbedingungen angepaßt und kann auch je nach verwendetem Extrudertyp abweichen.

In dem erfindungsgemäßen Verfahren setzt man Copolyester mit maximal 10 Mol-% Comonomeren, bevorzugt 2 bis 5 Mol-% ein, wobei die Comonomere ausgewählt sind aus der Gruppe Lactone, Isophthalsäure, Naphthalin-2,6-dicarbonsäure, 1,4-Cyclohexandimethanol und Diethylenglykol. Caprolacton ist ein besonders bevorzugtes Comonomer.

Der Temperaturbereich zwischen 285 bis 260°C wird in einer besonderen Ausführungsform fallend durchfahren. Die Verweilzeit im Reaktor beträgt üblicherweise weniger als 60 Min., wobei Reaktionszeiten von weniger als 40 Min. bevorzugt sind. Das Vakuum im Reaktor wird unter 1 mbar gehalten.

Zur zusätzlichen Extraktion des Acetaldehydgehaltes kann man noch Inertgas, wie z.B. Kohlendioxid in überkritischem Zustand oder Stickstoff eintragen.

Durch das erfindungsgemäße Verfahren sind Vorformlinge herstellbar mit einem Acetaldehydgehalt von maximal 10 ppm.

Es wurde nun überraschenderweise festgestellt, daß mittels des erfindungsgemäßen Verfahrens, d.h. unter Umgehung der Granulatstufe direkt Vorformlinge spritzgegossen werden können. Diese erfindungsgemäß herstellbaren Vorformlinge haben einen Acetaldehydgehalt von weniger als 10 ppm und entsprechen somit der Coca-Cola-Norm. Dieser sehr einfache und direkte Herstellungsweg - bei genauer Einhaltung der im Patentanspruch 1 angegebenen Reaktionsparameter - führt schnell zum Ziel und umgeht somit die zahlreichen und langwierigen Verfahrensstufen gemäß dem vorbeschriebenen Stand der Technik.

Nachfolgend wird das erfindungsgemäße Verfahren anhand der Figuren näher erläutert.

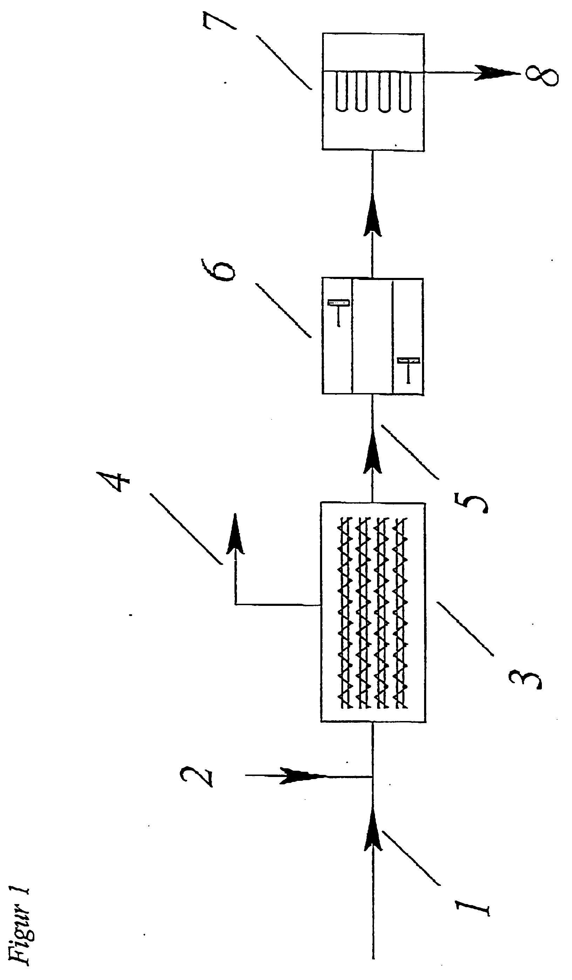

Figur 1 stellt das erfindungsgemäße Verfahren zur direkten Herstellung von Polyesterflaschen-Vorformlingen aus der Schmelze (ohne Umweg über die Festphase) dar. Die Bezugsziffern bedeuten:

1 Polyester-Schmelzestrom mit "normaler", d.h. textiler Qualität entsprechender Intrinsic-Viskosität von einer kontinuierlichen Polykondensationsanlage kommend, vorzugsweise ein auf Polyethylenterephthalat basierender Copolyester.

2 Optionaler Eintrag eines Inertgases in den Schmelzestrom 1.

3 Kontinuierlich arbeitender Schnecken-Nachkondensationsreaktor zur Erhöhung der Intrinsic-Viskosität bei gleichzeitiger weitgehender Acetaldehydentfernung.

4 Anschluß an ein Vakuumsystem zur Entfernung der flüchtigen Reaktionsprodukte.

5 Schmelzestrom mit Flaschen-Intrinsic-Viskosität und niedrigem Acetaldehydgehalt (ca. 5 ppm oder weniger).

6 Vorrichtung zur kontinuierlichen Abnahme des Schmelzestroms 5 und Beschickung des Spritzgußwerkzeugs 7, z.B. als Doppelkolbensystem.

7 Spritzgußwerkzeug mit Kavitäten für Flaschen-Vorformlinge.

8 Entnahme der Flaschen-Vorformlinge (Acetaldehydgehalt kleiner als 10 ppm).

Beim Polyesterstrom 1 handelt es sich um Polyethylenterephthalat (PET) und/oder vorzugsweise darauf basierenden Copolyestern (CoPET), welche üblicherweise etwa 2 bis 5 Mol-%, maximal bis 10 Mol-% Cokomponenten (Comonomere) enthalten. Es kommen bevorzugt beliebige geeignete difunktionelle Comonomere in Frage. Für die Anwendung als Flaschen besonders bevorzugt eingesetzt werden jedoch Isophthalsäure und Naphthalin-2,6-dicarbonsäure (bzw. deren Methylester) sowie 1,4-Cyclohexandimethanol und Diethylenglykol oder Lactone, besonders Caprolacton.
Mit dem Einbringen eines Inertgases 2 (Stickstoff, Argon, Helium oder Kohlendioxid)) in die Schmelze 1, erreicht man beim nachfolgenden Entspannen im Reaktor 3 eine größere Entgasungsoberfläche durch Blasenbildung sowie eine Absenkung des Partialdrucks der flüchtigen Reaktionsprodukte in der Gasphase, was die Reaktionsgeschwindigkeit erhöht. Wenn Kohlendioxid unter solchen Bedingungen eingetragen wird, daß es sich in der Schmelze zwischen der Zudosierstelle und dem Entspannungspunkt beim Eintritt in den Reaktor im überkritischen Zustand befindet, d.h. die Temperatur höher als 31°C und der Druck höher als 73,8 bar (7,38 MPa) ist, so kann man zusätzlich einen extraktiven Effekt auf den Acetaldehyd ausnützen. Dieser Effekt ist für die Behandlung von PET und CoPET im schmelzeflüssigen Zustand neu und noch nicht vorbeschrieben. Inertgas wird bevorzugt in einem Verhältnis zum Polyester in der Größenordnung von etwa 5 Normkubikmeter pro Tonne ($5m^3_n/t$) in die Schmelze eingetragen.
Der Nachkondensations-Reaktor 3 weist vorzugsweise im Verfahrensraum mindestens zwei Schneckenwellen auf.
Vorzugsweise sind diese Schnecken eng ineinandergreifend und gleichsinnig drehend. Damit wird eine gute Selbstreinigung und eine kontrollierte axiale Förderung der gesamten Schmelze erreicht, was gleichbedeutend mit einem engen Verweilzeitspektrum ist. Wichtig ist auch eine gute Zugänglichkeit für das Vakuum im gesamten Verfahrensraum, was durch ein entsprechendes Reaktor-Design möglich ist. Das Vakuum am Entgasungsstutzen sollte vorzugsweise weniger als 1 mbar abs. betragen. Eine schnelle Reaktion und weitgehende Acetaldehydentfernung wird überdies erreicht durch eine hohe Oberflächenerneuerung, die aber schonend geschehend muß, um thermische Schädigung durch zu hohe Scherung zu vermeiden. Das Optimum liegt bei einer entsprechend gewählten Schneckendrehzahl. Die mittlere Schmelzeverweilzeit im Reaktor beträgt weniger als 60, vorzugsweise weniger als 40 Minuten. Angepaßt an diese Verweilzeit werden mit Vorteil kleine Schneckensteigungen und/oder ein- oder zweigängige Schnecken gewählt. Einen großen Einfluß auf die Polykondensation und den Verlauf des Acetaldehydgehalts hat auch die Temperatur, die vorzusgweise im Bereich zwischen 260 und 285 °C liegt. Für eine schnelle Polykondensation (Viskositätsaufbau) ist eine hohe Temperatur, für einen tiefen Acetaldehhydgehalt, d.h. Minimierung der Neubildung von Acetaldehyd, der durch thermische Schädigung entsteht, eine niedrige Temperatur besser. Deshalb ist es von Vorteil, den bevorzugten Temperaturbereich im Reaktor fallend zu durchlaufen.
Geeignete Bauarten des Reaktors 3 sind Zwei- oder Mehrschnecken-Extruder-Reaktoren mit effizienter Vakuum-Entgasung, z.B. aus der ZR-Baureihe von Werner & Pfleiderer oder aus der MSE-Baureihe von Berstorff.
Mit geeigneten Reaktoren und optimierten Prozeßbedingungen sind Acetaldehydkonzentrationen in der austretenden Schmelze 5 von weniger als 5 ppm erreichbar, was bei einer Neubildung von maximal 5 ppm auf dem Weg bis in die Spritzgußkavität Vorformlinge mit weniger als 10 ppm Acetaldehydgehalt ergibt, die also für die spätere Getränkeabfüllung geeignet sind. Beim erfindungsgemäßen Verfahren liegt die Acetaldehyd-Neubildung wegen des Wegfalls des scherungsintensiven Wiederaufschmelzens im Vergleich zu den heutigen Verfahren sogar eher niedriger.

Neu und bis heute gemäß Stand der Technik unerreicht ist der für eine Schmelzebehandlung extrem niedrige Acetaldehydgehalt in der Größenordnung von 5 ppm oder weniger nach dem Reaktor. Gemäß Stand der Technik liegt der Acetaldehydgehalt bei amorphem (nicht Festphasen-behandeltem) Granulat bei etwa 35 bis 70 ppm, und selbst im besten Fall und direkt am Reaktoraustritt gemessen wurde bisher nur von Acetaldehydwerten von über 10 ppm berichtet (z.B. in DE 43 09 227 A1).

Die Vorrichtung 6 muß so ausgelegt und auf die beiden anderen Hauptapparate abgestimmt sein, daß die aus dem Reaktor 3 austretende Schmelze kontinuierlich abgenommen und nachher im Spritzgußzyklus taktweise dem Spritzgußwerkzeug 7 zugeführt wird. Dafür ist ein entsprechendes Doppelkolbensystem geeignet.

Das Spritzgußwerkzeug 7 schließlich ist von gleicher Bauart wie es als Basiskomponente auch in den bekannten Spritzguß-Systemen eingesetzt wird, die von handelsüblichem Flaschengranulat ausgehen.

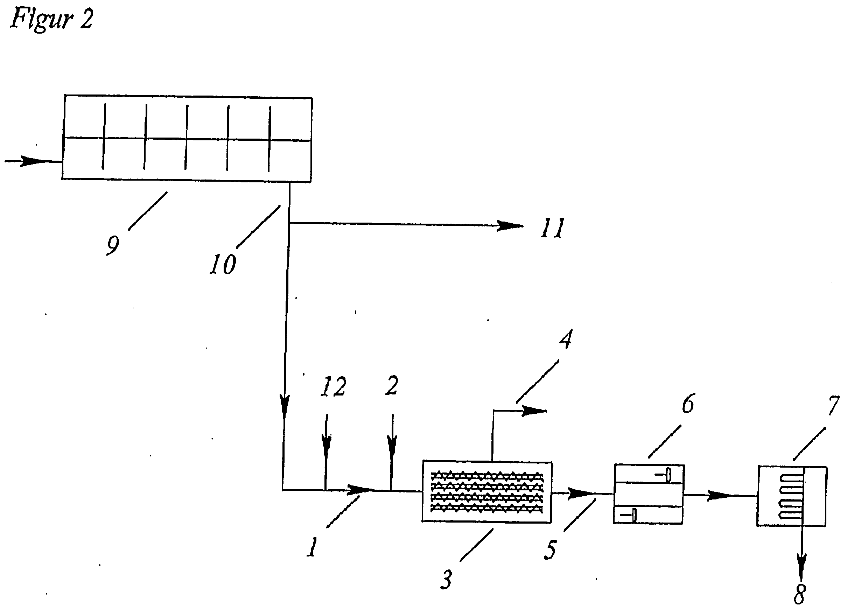

Eine besonders vorteilhafte Ausführung des erfindungsgemäßen Verfahrens ist die Verwendung eines Teilstroms von Polyester für textile Anwendung aus einer konventionellen Polykondensationsanlage mit größerem Durchsatz, wie es in Figur 2 schematisch dargestellt ist. Darin stellt 9 einen Endreaktor einer kontinuierlichen Polyesteranlage mit größerer Kapazität dar, die beispielsweise Polyethylenterephthalat (PET) mit "textilem" I.V.-Wert, d.h. mit einem Wert zwischen 0,5 und 0,75 dℓ/g produziert. Bezugsziffer 10 bezeichnet den aus dem Endreaktor 9 austretenden PET-Schmelzestrom, der an dieser Stelle noch pigmentfrei sein muß. Vom Gesamtstrom 10 wird ein (in der Regel größerer) Teilstrom 11 für textile Verwendung, d.h. die Herstellung von Fasern oder Filamenten, abgezweigt. Dieser Schmelzestrom muß vor dem Verspinnen noch mattiert werden, z.B. nach dem in DE 40 39 857 C2 beschriebenen Verfahren. Der Teilstrom 1 wird dem erfindungsgemäßen Verfahren der Vorformling-Herstellung zugeführt. Weil dafür aber statt PET vorzugswweise CoPET verwendet wird, bietet es sich vorteilhafterweise an, diesen PET-Teilstrom durch Zudosierung eines Comonomers 12 nach dem in DE 44 29 524.3 beschriebenen Verfahren in eine CoPET-Schmelze mit für die Vorformlingherstellung günstigen Eigenschaften umzuwandeln. Mit diesem integrierten Gesamtkonzept können Flaschen-Vorformlinge auf direktestem Weg auf elegante Art und Weise und mit hoher Wirtschaftlichkeit produziert werden. Es können Energie, Investitionen und Transportwege eingespart werden.

Eine weitere vorteilhafte Verfahrensvariante besteht darin, die kontinuierlich aus dem Reaktor 3 austretende Schmelze vollkontinuierlich zu einem Rohr mit Innen- und Außendurchmesser des zylindrischen Teils eines Vorformlings zu extrudieren, in Rohrabschnitte zu zerlegen und den Abschnitten anschließend einen Boden und ein Gewinde anzuformen. Der Vorteil nach dieser Verfahrensvariante liegt in einer noch kürzeren Schmelzeverweilzeit nach Reaktor 3.

Bei den nachfolgenden Versuchsbeispielen wurden die maßgebenden Polyester-Eigenschaften nach folgenden Methoden bestimmt:

- Die Intrinsic-Viskosität wurde bestimmt durch Messen der relativen Lösungsviskosität R.V. in einer Lösungsmittelmischung, bestehend aus gleichen Massenanteilen Phenol und 1,1',2,2'-Tetrachlorethan. Die Polyesterkonzentration C betrug 0,5 g/dℓ, die Meßtemperatur 20 °C. Die Umrechnung auf I.V. erfolgte mit der Gleichung von Huggins, wobei $K_H = 0{,}35$:

$$I.V. = \frac{\sqrt{1 + 4K_H(R.V.-1)} - 1}{2K_H \cdot C} = \frac{\sqrt{1 + 1{,}4\,(R.V.-1)} - 1}{0{,}35} \quad (d\ell/g)$$

- Zur Bestimmung des Acetaldehydgehalts (gemeint ist der in freier Form vorliegende, physikalisch gebundene Acetaldehyd) wurde das Polyestermaterial zunächst in flüssigem Stickstoff abgekühlt und dann unter Zugabe von flüssigem Stickstoff gemahlen. Von der zwischen 0,25 und 1,0 mm liegenden Siebfraktion wurde 1,0 g in ein mit Stickstoff gespültes 15 mℓ-Glasfläschchen eingewogen, und das Fläschchen mit Septum und einer Aluminiumkappe verschlossen und anschließend 1,5 Stunden lang bei 140 °C gehalten. Nach der Abkühlung auf Raumtemperatur wurde der Acetaldehydgehalt in der Gasphase des Fläschchens mittels eines Gaschromatographen mit Head space-Einrichtung gemessen und auf das Probengewicht umgerechnet.

**Beispiele 1 bis 16**

Diese Versuche wurden auf einem Schmelzenachkondensations-Reaktor des Typs ZR 80 von Werner & Pfleiderer durchgeführt. Dieser Reaktor weist zwei gleichsinnig drehende und miteinander kämmende, eingängige Schnek-

ken auf mit einem Vakuumraum über die ganze Länge. Ausgegangen wurde von einem handelsüblichen textilen PET-Granulat (mikromatt) mit I.V.-Wert 0,673 d$\ell$/g. Dieses wurde getrocknet und in einem Einwellenextruder aufgeschmolzen. Die dem ZR 80 zugeführte Schmelze hatte eine Intrinsic-Viskosität von 0,647 d$\ell$/g. In verschiedenen Beispielen, die in Tabelle 1 zusammengefaßt sind, wurden die Prozeßparameter variiert und optimiert. Das Vakuum wurde bei 0,5 mbar konstant gehalten. Die behandelte Schmelze wurde mit einer Zahnradpumpe ausgetragen und granuliert. Die Produktqualität wurde an amorphen Granulatproben bestimmt.

In den ersten vier Beispielen wurden im Vergleich zu bekannten Endreaktoren relativ normale Bedingungen angewandt, d.h. Temperaturen bis 285 °C und verhältnismäßig niedrige Schneckendrehzahlen. Während Beispiel 1 noch einen Acetaldehydgehalt in der üblichen Größenordnung von ca. 30 ppm ergab, konnten in den Beispielen 2 bis 4 durch Erhöhung der Drehzahl und/oder Verlängerung der Verweilzeit bereits markant niedrigere Werte erreicht werden, die aber bei 11 ppm stagnierten. Die Intrinsic-Viskosität der Beispiele 3 und 4 lag im richtigen Bereich für die Flaschen-Anwendung.

Im Beispielblock 5 bis 10 wurde bei konstanter Verweilzeit von 33 Minuten zum einen das Temperatur-Niveau abgesenkt und zum anderen der Drehzahlbereich erhöht. Dies führte zu unerwarteten und überraschenden Ergebnissen: Bei Beispiel 5 lag der Acetaldehydgehalt, verglichen mit Beispiel 2, zunächst noch (entgegen den Erwartungen) höher, doch bei weiterer Erhöhung der Drehzahl kam es zu einer sensationellen Verbesserung des Acetaldehydgehalts auf 4 ppm und darunter. Über derart tiefe Acetaldehydwerte in amorphem Granulat wurde noch nie berichtet, weshalb es bis jetzt auch noch niemand für möglich hielt, ohne Festphasenbehandlung zu Polyesterflaschen zu gelangen. Bei höherer Schneckendrehzahl und entsprechender Oberflächenerneuerung auf schonende Art kann offenbar der Acetaldehyd sehr effektiv entfernt werden. Sichtbar wurde auch der Einfluß der Temperaturführung: erstaunlicherweise lieferte ein auf die gleiche Endtemperatur abfallendes Temperaturprofil (mit gleicher Endviskosität) tendenziell tiefere Acetaldehydwerte als ein ansteigendes Profil.

Beim wegen der Intrinsic-Viskosität auf 52 Minuten Verweilzeit erhöhten Beispielblock 11 bis 16 wurden die komplexen Zusammenhänge deutlich: beim ansteigenden Temperaturprofil (Beispiele 11 bis 13) kehrte sich der Einfluß der Schneckendrehzahl gegenüber den vorherigen Beispielen gerade um, so daß also der Acetaldehydgehalt bei hoher Drehzahl höher war. Bei fallendem Temperaturprofil war bei niedrigen Drehzahlen der Acetaldehydgehalt zunächst wider Erwarten hoch, verbesserte sich aber bei hoher Drehzahl schlagartig auf 4,2 ppm. Die Schmelze von Beispiel 16 war somit sowohl vom Acetaldehydgehalt als auch von der Intrinsic-Viskosität her zur direkten Vorformling-Herstellung geeignet.

**Beispiele 17 bis 21**

Diese Versuchsreihe wurde durchgeführt auf einem Mehrschneckenextruder des Typs MSE 40R x 12D von Berstorff. Diese Maschine weist im Verfahrensraum zehn kreisende und gleichsinnig rotierende, eng ineinandergreifende Schneckenwellen auf, die auf beiden Seiten in Planetengetrieben gelagert sind, die durch eine zentrale Welle angetrieben werden. Vor dem Planetengetriebe auf der Eintrittsseite gibt es die Möglichkeit der Einleitung von Inertgas in die Schmelze.

Ausgegangen wurde von einem pigmentfreien amorphen CoPET-Granulat mit 4 Mol-% $\epsilon$-Caprolacton als Comonomer. Zur Rezeptur gehörten ferner 156 ppm $Sb_2O_3$, 63 ppm $H_3PO_4$ und 85 ppm $Co(CH_3COO)_2 \cdot 4\ H_2O$. Nach Kristallisation und Trocknung hatte dieses Granulat einen I.V.-Wert von 0,589 d$\ell$/g, nach dem Aufschmelzen beim Eintritt in den MSE einen solchen von 0,581 d$\ell$/g.

In Tabelle 2 ist dargestellt, wie der Acetaldehydgehalt durch Optimierung der Prozeßbedingungen auf weniger als 10 ppm verbessert werden konnte (gemessen an amorphem Granulat nach dem MSE). Dabei waren die maximalen Möglichkeiten noch nicht voll ausgeschöpft worden. Dank der großen freien Oberfläche im MSE und mit Stickstoffunterstützung (Verhältnis 4 $m^3_n$/t) konnte die notwendige Verweilzeit zur Erreichung von Flaschenviskosität auf 15 Minuten reduziert werden. Deutlich sichtbar wurde der Einfluß von zu hoher Schneckendrehzahl auf den Acetaldehydgehalt: oberhalb eines Optimums kommt es durch übermäßige Scherung zu thermischer Schädigung (Beispiele 17 und 19).

EP 0 727 303 B1

## Tabelle 1

### ZR80 - Prozeßparameter und Granulatqualität

| Beispiel Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Schmelze-temperatur Eintritt [°C] | 283 | 283 | 283 | 283 | 265 | 265 | 265 | 275 | 275 | 275 | 265 | 265 | 265 | 275 | 275 | 275 |
| Temperatur ZR 80 [°C] | 285 | 285 | 285 | 285 | 270 | 270 | 270 | 270 | 270 | 270 | 270 | 270 | 270 | 270 | 270 | 270 |
| mittlere Verweilzeit [min] | 33 | 33 | 52 | 52 | 33 | 33 | 33 | 33 | 33 | 33 | 52 | 52 | 52 | 52 | 52 | 52 |
| Schnecken-drehzahl [min$^{-1}$] | 8 | 12 | 8 | 12 | 12 | 18 | 24 | 12 | 18 | 24 | 12 | 18 | 24 | 12 | 18 | 24 |
| Intrinsic-Viskosität [dℓ/g] | 0,758 | 0,783 | 0,837 | 0,850 | 0,745 | 0,758 | 0,764 | 0,743 | 0,758 | 0,761 | 0,781 | 0,805 | 0,805 | 0,800 | 0,817 | 0,826 |
| Acetalde-hydgehalt [ppm] | 31 | 12 | 11 | 11 | 17 | 4,0 | 3,8 | 4,6 | 4,0 | 3,7 | 4,0 | 12 | 12 | 26 | 17 | 4,2 |

7

Tabelle 2

MSE-Prozeßparameter und Granulatqualität

| Beispiel Nr. | | 17 | 18 | 19 | 20 | 21 |
|---|---|---|---|---|---|---|
| Temperatur | [°C] | 275 | 277 | 275 | 275 | 260 |
| Vakuum | [mbar] | 0,5 | 1,0 | 0,1 | 0,1 | 0,1 |
| mittlere Verweilzeit | [min] | 15 | 15 | 15 | 15 | 15 |
| Drehzahl Zentralwelle | [min⁻¹] | 40 | 30 | 39 | 21 | 21 |
| Drehzahl Schnecken | [min⁻¹] | 73,6 | 55,2 | 71,8 | 38,6 | 38,6 |
| Stickstoff | (ja/nein) | ja | nein | ja | ja | ja |
| Intrinsic-Viskosität | [dℓ/g] | 0,886 | 0,756 | 0,847 | 0,834 | 0,819 |
| Acetaldehydgehalt | [ppm] | 31 | 15 | 30 | 11 | 8,4 |

**Patentansprüche**

1. Kondensations-Spritzgußverfahren zur Herstellung von Flaschenvorformlingen aus der Schmelze von Polyethylenterephthalat und/oder seinen Copolyestern, bei dem in den kontinuierlichen Strom oder Teilstrom der Polyester-Schmelze aus einer Polykondensation, welche eine Intrinsic-Viskosität zwischen 0,5 und 0,75 dℓ/g aufweist, wahlweise ein Inertgas eingetragen wird, die Schmelze anschließend unter Vakuum, im Temperaturbereich zwischen 285 bis 260°C in einem Schmelze-Nachkondensationsreaktor auf eine Intrinsic-Viskosität von 0,75 bis 0,95 dℓ/g während einer Verweilzeit von weniger als 60 Min. auf einen Acetaldehydgehalt unter 10 ppm, bevorzugt unter 5 ppm gefahren und unmittelbar darauf, gegebenenfalls mittels einer Fördereinrichtung, in ein Spritzguß-Werkzeug geleitet und zu Vorformlingen verarbeitet wird.

2. Verfahren nach Anspruch 1, dadurch gekennzeichnet, daß man Copolyester mit maximal 10 Mol-% Comonomeren, bevorzugt 2 bis 5 Mol-% einsetzt.

3. Verfahren nach Anspruch 2, dadurch gekennzeichnet, daß die Comonomere ausgewählt sind aus der Gruppe Lactone, Isophthalsäure, Naphthalin-2,6-dicarbonsäure, 1,4-Cyclohexandimethanol und Diethylenglykol, wobei Caprolacton bevorzugt ist.

4. Verfahren nach Anspruch 1, dadurch gekennzeichnet, daß der Temperaturbereich fallend durchfahren wird.

5. Verfahren nach einem der vorhergehenden Ansprüche, dadurch gekennzeichnet, daß die Verweilzeit im Reaktor weniger als 40 Minuten beträgt.

6. Verfahren nach einem der vorhergehenden Ansprüche, dadurch gekennzeichnet, daß man als Schmelze-Nachkondensationsreaktor einen Schneckenreaktor mit mindestens zwei Schneckenwellen verwendet.

7. Verfahren nach einem der vorhergehenden Ansprüche, dadurch gekennzeichnet, daß man als Fördereinrichtung eine Vorrichtung mit Doppelkolbensystem verwendet.

8. Verfahren nach einem der vorhergehenden Ansprüche, dadurch gekennzeichnet, daß das Vakuum unter 1 mbar gehalten wird.

9. Verfahren nach einem der vorhergehenden Ansprüche, dadurch gekennzeichnet, daß als Inertgas Kohlendioxid im überkritischen Zustand oder Stickstoff eingetragen wird.

**Claims**

1. Condensation injection-moulding process for the production of bottle preforms from the melt of polyethylene terephthalate and/or its copolyesters, in which alternatively an inert gas is introduced into the continuous stream or part-stream of the polyester melt from a polycondensation, which has an intrinsic viscosity between 0.5 and 0.75 dl/g, and the melt is then brought to an intrinsic viscosity of 0.75 to 0.95 dl/g and to an acetaldehyde content below 10 ppm, preferably below 5 ppm, under vacuum in the temperature range between 285 and 260°C in a melt postcondensation reactor during a residence time of less than 60 minutes and immediately thereafter is passed into an injection mould, optionally via a conveyor means, and is processed to give preforms.

2. Process according to Claim 1, characterized in that copolyester containing not more than 10 mol% of comonomers, preferably from 2 to 5 mol%, is used.

3. Process according to Claim 2, characterized in that the comonomers are selected from the group consisting of lactones, isophthalic acid, naphthalene-2,6-dicarboxylic acid, 1,4-cyclohexanedimethanol and diethylene glycol, caprolactone being preferred.

4. Process according to Claim 1, characterized in that the temperature range is passed through in a descending manner.

5. Process according to any of the preceding claims, characterized in that the residence time in the reactor is less than 40 minutes.

6. Process according to any of the preceding claims, characterized in that the melt postcondensation reactor used is a screw-type reactor having at least two screw shafts.

7. Process according to any of the preceding claims, characterized in that the conveyor means used is an apparatus having a double plunger system.

8. Process according to any of the preceding claims, characterized in that the vacuum is kept below 1 mbar.

9. Process according to any of the preceding claims, characterized in that carbon dioxide in the supercritical state or nitrogen is introduced as the inert gas.

**Revendications**

1. Procédé de moulage par injection avec condensation pour la production de préformes de bouteilles à partir d'une masse fondue de poly(téréphtalate d'éthylène) et/ou de ses copolyesters, dans lequel on introduit un gaz inerte à volonté dans le courant continu ou le courant partiel de la masse fondue de polyester provenant d'une polycondensation, qui présente une viscosité intrinsèque comprise entre 0,5 et 0,75 dl/g, on fait passer ensuite la masse fondue sous vide, dans la plage de températures de 285 à 260°C, dans un réacteur de recondensation de la masse fondue jusqu'à une viscosité intrinsèque de 0,75 à 0,95 dl/g pendant une durée de séjour de moins de 60 minutes jusqu'à une teneur en acétaldéhyde inférieure à 10 ppm, de préférence inférieure à 5 ppm et immédiatement après, on fait arriver la masse fondue dans un moule à injection, le cas échéant au moyen d'un dispositif de transport, et on l'y transforme en préformes.

2. Procédé suivant la revendication 1, caractérisé en ce qu'on utilise un copolyester avec au maximum 10 moles % de comonomères, de préférence un maximum de 2 à 5 moles %.

3. Procédé suivant la revendication 2, caractérisé en ce que les comonomères sont choisis dans le groupe comprenant des lactones, l'acide isophtalique, l'acide naphtalène-2,6-dicarboxylique, le 1,4-cyclohexanediméthanol et le diéthylène-glycol, avec une préférence pour la caprolactone.

4. Procédé suivant la revendication 1, caractérisé en ce que la plage de températures est parcourue par valeurs décroissantes.

5. Procédé suivant l'une des revendications précédentes, caractérisé en ce que la durée de séjour dans le réacteur s'élève à moins de 40 minutes.

6. Procédé suivant l'une des revendications précédentes, caractérisé en ce qu'on utilise comme réacteur de recondensation de la masse fondue un réacteur à vis sans fin ayant au moins deux arbres de vis sans fin.

7. Procédé suivant l'une des revendications précédentes, caractérisé en ce qu'on utilise comme dispositif de transport un dispositif équipé d'un système à deux pistons.

8. Procédé suivant l'une des revendications précédentes, caractérisé en ce que le vide est maintenu en dessous de 1 mbar.

9. Procédé suivant l'une des revendications précédentes, caractérisé en ce qu'on introduit comme gaz inerte du dioxyde de carbone à l'état surcritique ou de l'azote.

*Figur 1*

Figur 2